# FASCICULE DE BREVET EUROPEEN

(11) **EP 2 142 947 B1**
(45) Date de publication et mention de la délivrance du brevet: **15.11.2017**
(21) Numéro de dépôt: 08788190.0
(22) Date de dépôt: 16.04.2008
(51) Int. Cl.: G02B 5/02, G02B 5/18

(54) **RESEAU DIFFUSANT LA LUMIERE**
LICHTSTREUUNGSNETZWERK
LIGHT SCATTERING NETWORK

(30) Priorité: 04.05.2007 FR 0754877
(43) Date de publication de la demande: 13.01.2010
(73) Titulaire: Saint-Gobain Glass France, 92400 Courbevoie (FR)
(72) Inventeur: MENEZ, Ludivine, F-75004 Paris (FR); MULET, Jean-Philippe, F-94300 Vincennes (FR); LALANNE, Philippe, F-91120 Palaiseau (FR)
(74) Mandataire: Saint-Gobain Recherche
(86) Numéro de dépôt international: PCT/FR2008/050677
(87) Numéro de publication internationale: WO 2008/145895

(56) Documents cités:
- WO-A-2004/008190
- WO-A-2006/014408
- JP-A- 59 099 219
- US-A- 4 502 756
- US-A- 5 009 484
- US-A- 6 094 306
- US-A1- 2007 031 140

## Description

L'invention concerne le domaine des vitrages pour bâtiment comprenant des éléments capable de rediriger la lumière venant de l'extérieur dans une direction souhaitée à l'intérieur, généralement le plafond. Ce type de vitrage est généralement qualifié de « Daylighting » lorsque c'est la lumière solaire visible que l'on cherche à dévier.

Ce type de vitrage est généralement considéré comme contribuant à économiser l'énergie du fait de l'utilisation plus efficace en intérieur de lumière extérieure, ce qui permet de réduire l'éclairage artificiel.

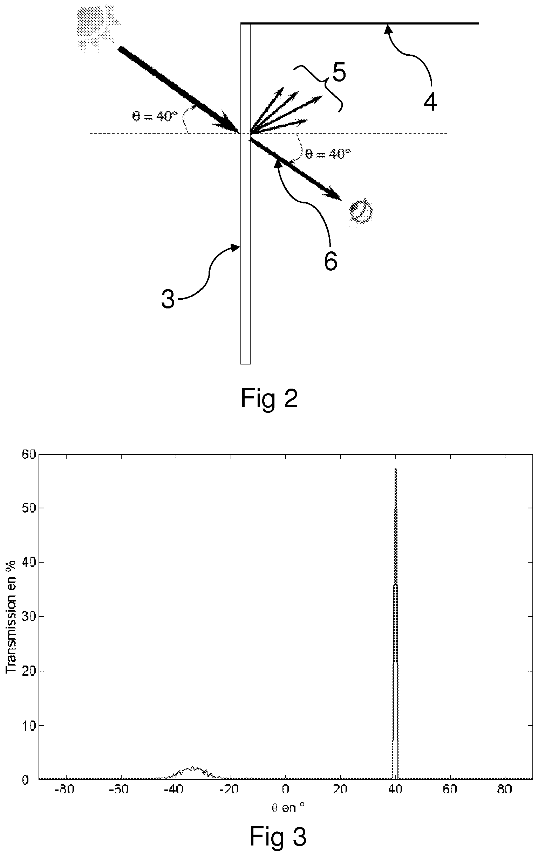

Le US5009484 enseigne un vitrage comprenant en surface un réseau de diffraction constitué de traits parallèles en relief. Ce document enseigne que le réseau mène habituellement à une diffraction de la lumière se traduisant par une séparation de couleurs. Cet effet n'est pas forcément souhaité. Pour limiter l'ampleur de ce phénomène, ce même document préconise (voir sa figure 3) de juxtaposer verticalement trois réseaux successifs pour chacune des trois couleurs fondamentales, les faisceaux émergents de ces trois couleurs devant se mélanger de nouveau au plafond pour reformer une zone éclairée incolore. Les trois réseaux successifs présentent des périodicités différentes, variant de façon monotone et selon un ordre précis. Ce document enseigne également que ces trois réseaux successifs peuvent être remplacés par un réseau unique dont la périodicité évolue de façon monotone de l'une à l'autre des extrémités de ce réseau unique. Les solutions enseignées par ce brevet fonctionnent quelque peu mais n'empêchent pas toute formation d'irisations. De plus, dans ce document, les motifs diffusants sont penchés, éventuellement variables, et de profondeur variable, ce qui rend très difficile une fabrication industrielle sur une grande surface et à bas coûts.

La présente invention a trait à un réseau de surface limitant la séparation apparente des différentes couleurs de la lumière et menant à un éclairage de sensiblement même coloration que la lumière incidente, sans irisation apparente prononcée de la lumière déviée (généralement sur le plafond). Ainsi, si la lumière incidente est sensiblement incolore à l'oeil nu, la lumière émergente l'est également. On souhaite que la lumière déviée le soit selon un seul ordre du réseau (généralement l'ordre 1 du réseau), car sinon cela produirait différentes zones séparées d'éclairage (au plafond si la lumière est projetée au plafond) dont certaines ne seraient pas judicieusement placées et de plus, cela pourrait être inesthétique.

Selon l'invention, on crée à la surface d'un substrat transparent et selon une direction parallèle à ladite surface un réseau comprenant une alternance d'au moins deux indices de réfraction R1 et R2 par des motifs élémentaires linéaires d'indice R1 séparés par des domaines élémentaires linéaires d'indice R2, lesdits motifs et domaines étant géométriquement complémentaires entre eux. Les motifs et domaines sont complémentaires sur le plan géométrique car ils s'imbriquent les uns dans les autres. C'est pourquoi la seule définition de la géométrie des motifs d'indice R1 est suffisante puisque les domaines d'indice R2 remplissent tout l'espace situé entre les motifs. On définit la géométrie des motifs à partir de leur barycentre, de leur largeur L dans le plan parallèle au substrat, de la distance d d'un barycentre à l'autre entre motifs voisins et de leur profondeur p.

Le substrat selon l'invention peut même être transparent, ce qui signifie que l'on peut alors voir de façon nette à travers lui sans que les objets n'apparaissent diffus ou troubles, et ce, quel que soit l'angle de vision pour l'observateur. Cette transparence en vision directe est d'autant meilleure que la largeur des motifs reste sensiblement constante tout au long du réseau. Le réseau de lignes selon l'invention n'a donc un effet diffusant que pour la lumière redirigée. Le substrat transparent comportant un réseau redirige une portion de la lumière incidente dans la direction souhaitée (ordre 1 du réseau), par exemple le plafond. Dans le même temps il laisse passer sans la dévier le reste de la lumière incidente (ordre 0 du réseau). Le substrat transparent selon l'invention comprend un réseau diffusant la lumière redirigée afin que cette lumière ne comporte pas d'irisation apparente prononcée. La transmission dans l'ordre 1 (lumière redirigée) ne se fait pas suivant une direction unique mais sur une large plage d'angles. Au contraire et si la largeur L des motifs est sensiblement constante, la lumière transmise sans être redirigée, n'est pas diffusée. Ainsi, la transmission dans l'ordre 0 se fait dans la même direction que le rayon lumineux incident. Le substrat selon l'invention est donc transparent et non-diffusant en vision directe pour un observateur.

Une partie de la lumière est redirigée (c'est-à-dire déviée) quel que soit son angle d'incidence. Le réseau diffuse la lumière qu'il dévie. Si l'on défini l'angle d'incidence de la lumière comme étant l'angle compris entre la perpendiculaire au substrat et la direction de la lumière (ce qui correspond à l'angle θ indiqué sur la figure 2), la lumière redirigée est de 10 à 50% de la lumière totale transmise (traversant le substrat), en particulier pour la lumière d'angle d'incidence supérieure à 30°. Ainsi, l'invention présente une utilité plus élevée pour équiper les vitrages (disposés verticalement) de locaux situés aux latitudes terrestres telles que les rayons solaires peuvent former un angle d'incidence avec l'horizontale supérieur à 30° au moins partiellement au cours de l'année.

Selon l'invention, la distance d entre barycentres de motifs voisins varie de façon non-monotone d'un bord à l'autre du réseau. Le terme « non-monotone » signifie que cette distance ne fait pas qu'augmenter ou que diminuer quand on va d'un bord du réseau à l'autre bord. Au contraire, cette distance d alterne de plus fortes valeurs avec de plus faibles valeurs quand on passe d'un bord du réseau à l'autre.

Ainsi l'invention concerne en premier lieu un substrat pouvant être transparent en vision directe, comprenant à sa surface un réseau de lignes d'au moins 200 motifs, lesdits motifs étant séparés par des domaines d'indice de réfraction différent de celui des motifs, la distance d entre barycentres de motifs voisins variant de manière non-monotone d'un bord à l'autre du réseau, de sorte que pour tout groupe de 50 motifs successifs, voire même tout groupe de 20 motifs successifs, la distance d entre barycentres de motifs voisins dudit groupe est au moins une fois supérieure et au moins une fois inférieure à la distance moyenne dm des distances d entre barycentres de motifs voisins dudit groupe, dm étant comprise entre 75 nm et 200 µm. Ainsi, quelque soit le groupe de 50 motifs successifs voire même de 20 motifs successifs, que l'on choisi sur le réseau, on peut constater que la distance d n'est pas constante à l'intérieur de ce groupe.

De préférence, dans le réseau selon l'invention, des motifs identiques juxtaposés forment des blocs de 3 à 15 motifs et de préférence de 3 à 7 motifs. Un bloc est donc caractérisé par une distance identique entre motifs, de barycentre à barycentre. Quand on part de l'intérieur d'un bloc, dès que la distance entre motifs change, c'est que l'on quitte le bloc. On peut passer d'un bloc à l'autre directement, de sorte que le motif à la jonction de deux blocs fait partie des deux blocs. Cependant, la distance entre deux blocs peut aussi être différente de la distance entre motifs de l'un ou l'autre de ces blocs. Dans ce cas, il n'y a pas de motif qui appartient en même temps aux deux blocs. De préférence, au moins 80% et même au moins 90% des motifs du réseau font partie de blocs. Un bloc comprend au minimum trois motifs et deux intervalles identiques entre ces trois motifs. Un bloc de n motifs contient n-1 intervalles. Dire que au moins 80% des motifs du réseau font partie de blocs de 3 à 15 motifs entraîne qu'il est possible que des blocs isolés de plus de 15 motifs se trouvent ici ou là dans le réseau. Si un « bloc isolé » de plus de 15 motifs contient plus de 20 motifs, cela est compatible avec la notion selon laquelle pour tout groupe de 50 motifs successifs, la distance d entre barycentres de motifs voisins dudit groupe est au moins une fois supérieure et au moins une fois inférieure à la distance moyenne dm des distances d entre barycentres de motifs voisins dudit groupe.

Compte tenu de cette notion de blocs, préférée, on peut dire que la structure du réseau est de préférence localement organisée. L'effet de cette organisation locale et notamment du caractère constant de la largeur L est la transparence sans diffusion en vision directe. Un substrat transparent est défini comme un substrat dont les propriétés en absorption sont proches de celles d'un vitrage classique, un objet vu à travers ce substrat n'apparaissant pas flou.

Le réseau comprend généralement au total plus de 100 000 motifs et plus généralement plus de 1 000 000 motifs.

Dans un groupe de motifs successifs (50 ou même de préférence 20), on définit la distance moyenne dm entre motifs voisins comme le rapport de la somme de toutes les distances d entre barycentres de motifs voisins du groupe sur le nombre de distances entre barycentres de motifs voisins du groupe.

La variation de d à l'intérieur d'un groupe de 50 ou même de préférence 20 motifs successif ou même de tout groupe de 50 voire même de tout groupe de 20 motifs successifs, peut-être plus importante que de passer une seule fois au-dessus de dm et une seule fois en-dessous de dm. Notamment, quand on va d'un bord du groupe en direction de l'autre bord du groupe, d peut-être au moins deux fois supérieur et au moins deux fois inférieur à la distance moyenne dm des distances d à l'intérieur dudit groupe, les deux fois ou d est supérieur à dm étant séparées par une fois ou d est inférieur à dm, et les deux fois ou d est inférieur à dm étant séparées par une fois ou d est supérieur à dm. La fréquence de cette alternance peut être encore plus grande.

A l'intérieur de tout groupe de 50 ou même de préférence 20 motifs successifs, d varie autour du dm du groupe en s'écartant au moins deux fois de dm d'au moins la valeur y, au moins une fois en étant au dessus de dm + y et au moins une fois en étant en-dessous de dm - y. La valeur y dépend du domaine de longueur d'onde que l'on cherche à dévier. On peut dire que généralement, y est d'au moins 5% dm et plus généralement d'au moins 10% dm.

La valeur d varie autour de dm en restant généralement à l'intérieur d'une plage entre dm + x et dm - x , la valeur x dépendant de la longueur d'onde que l'on cherche à dévier. Généralement, x est d'au plus 50% dm et plus généralement d'au plus 20% dm.

Quel que soit le groupe de 50 ou même de préférence 20 motifs successifs du réseau, la valeur dm pour le groupe a une valeur de l'ordre de la longueur d'onde du rayonnement que l'on cherche à dévier.

Rappelons que les rayonnements lumineux ont sensiblement les longueurs d'onde suivantes :
Ultra-violet : 150 à 400 nm
Visible : 400 à 800 nm
Infrarouge: 800 nm à 100 µm

Quel que soit le groupe de 50 ou même de préférence 20 motifs successifs, on choisit la valeur dm entre 1/2 et 2 fois la longueur d'onde que l'on cherche à dévier. La valeur dm est donc toujours comprise entre 75 nm et 200 µm. En général, quel que soit le groupe de 50 ou même de préférence 20 motifs successifs, dm est compris entre 100 nm et 20 µm.

Si c'est la lumière visible que l'on cherche à dévier, on choisi de préférence dm dans la plage de 200 à 600 nm et de préférence dans la plage de 300 à 500 nm. Pour dévier la lumière visible, dm est de préférence supérieur ou égal à 200 nm et même supérieur ou égal à 300 nm. Pour dévier la lumière visible, dm est de préférence inférieur ou égal à 600 nm et même inférieur à 500 nm et de manière encore préférée inférieur ou égal à 450 nm. Si dm est trop élevé, notamment au-delà de 500 nm, la lumière transmise non-déviée est moins intense et, par ailleurs, on fait apparaître des ordres supérieurs du réseau, ce qui signifie que la lumière déviée l'est en plusieurs endroits.

Bien que l'on n'exclut pas qu'ils soient inclinés, les motifs sont généralement non inclinés (l'homme du métier dirait « blazés », néologisme issus de l'anglais « blazed »), c'est-à-dire symétriques par rapport à la droite perpendiculaire au substrat et passant par le barycentre du motif.

Si l'on désigne par DM la valeur moyenne de d pour tout le réseau (pas seulement 50 ou 20 de ses motifs), à titre d'exemple, la fluctuation de d quand on va d'un bord à l'autre du réseau peut être déterminée et suivre une courbe sinusoïdale autour de la valeur DM. Cette fluctuation peut être cependant aléatoire. Dans ce cas, la courbe représentant la distribution de d autour de DM est du type courbe de Gauss. II n'y a dans ce cas aucune périodicité de réseau. On choisit la valeur DM entre 1/2 et 2 fois la longueur d'onde que l'on cherche à dévier. La valeur DM est donc toujours comprise entre 75 nm et 200 µm, et généralement entre 100 nm et 20 µm. Comme on l'a vu, de préférence, les motifs sont groupés en blocs.

De préférence, L est constant ou sensiblement constant pour tout le réseau. Cependant, L peut varier autour d'une valeur moyenne Lm, cette variation étant de préférence inférieure à 50% de Lm. La largeur L peut donc varier entre 0,5Lm et 1,5Lm. Plus L varie dans le réseau, plus celui-ci perd en transparence en vision directe. Généralement, la largeur Lm des motifs est choisie dans le domaine allant de 0,1 DM à 0,9 DM et de préférence de 0,4 DM à 0,6 DM. On définit la largeur L d'un motif comme étant sa largeur au niveau de son barycentre. Les motifs sont généralement des parallélépipèdes. Dans la pratique, la perfection n'étant pas de ce monde, ces parallélépipèdes peuvent avoir leurs coins (concaves et convexes) plus ou moins arrondis.

Généralement, la profondeur des motifs est constante pour tout le réseau. Généralement, le rapport de la largeur L sur la profondeur des motifs est choisi dans le domaine allant de 0,2 à 5 et de préférence de 0,4 à 2. Généralement, le rapport de la largeur L sur la profondeur des motifs est constant pour tout le réseau.

Si l'on suit une ligne parallèle au substrat passant par les barycentres des motifs, on passe successivement par l'indice de réfraction R1 des motifs et l'indice de réfraction R2 des domaines entre motifs. Notamment, les motifs peuvent être en verre et les domaines peuvent être de l'air. On est dans ce cas lorsque l'on produit à titre de motifs des excroissances en verre à la surface d'un substrat en verre. L'air ambiant remplit l'espace entre les motifs et constitue naturellement les domaines. Dans ce cas, l'indice R1 est celui du verre, par exemple 1,5 et l'indice R2 est celui de l'air, c'est-à-dire 1. Dans cet exemple, on a réalisé un relief de motifs à la surface d'un substrat. Le passage d'un motif à un domaine peut cependant correspondre à une modification d'indice de réfraction ne correspondant pas à un relief. En effet, il peut s'agir de deux matériaux différents imbriqués l'un dans l'autre de telle sorte que la surface soit lisse au toucher. On peut notamment réaliser une telle alternance de matériaux par les techniques d'échange ionique ou basées sur un effet photoréfractif et électrooptique.

Dans le même réseau, tous les motifs ont généralement le même indice de réfraction et tous les domaines ont généralement le même indice de réfraction. Les indices de réfractions des motifs et domaines peuvent aller de 1 à 2,2. Généralement les motifs peuvent avoir leur indice de réfraction allant de 1,1 à 1,8. Généralement les domaines peuvent avoir leur indice de réfraction allant de 1 à 1,5.

La différence entre les deux indices de réfraction (ceux des motifs et des domaines) peut généralement être comprise entre 0,02 et 1,5.

En général, si les domaines sont de l'air, les motifs ont un indice de réfraction supérieur à celui des domaines.

S'agissant essentiellement d'équiper des vitrages de bâtiments, on choisira les matériaux constituant lesdits vitrages (substrat, éventuelle pièce rapportée sur ledit substrat) avec une transparence satisfaisante.

Le réseau selon l'invention sert notamment en application daylighting. Dans ce cas, il est généralement placé sur un vitrage vertical de sorte que les lignes de motifs soient horizontales. On n'exclut pas que les lignes de motifs soient inclinées. Le réseau occupe généralement une hauteur d'au moins 10 cm et plus généralement une hauteur d'au moins 20 cm du vitrage, généralement sur toute la largeur du vitrage.

Le réseau selon l'invention peut généralement être réalisé par les techniques suivantes : embossage, photolithographie, transfert, échange ionique, effet photoréfractif ou électrooptique.

Un premier procédé comprend l'embossage d'une couche sol-gel ou polymère rapportée sur une feuille transparente (substrat), notamment en verre. L'embossage est une déformation plastique ou viscoplastique réalisée par contact avec un élément structuré, consistant en un rouleau par exemple, et sur lequel est simultanément exercée une pression. Les couches sol-gel utilisables sont en général des couches liquides de précurseur d'oxyde minéral tel que SiO₂, Al₂O₃, TiO₂ ..., par exemple en solution dans un mélange eau-alcool. Ces couches durcissent en séchant, avec ou sans moyen auxiliaire de chauffage. Citons comme précurseur de SiO₂ le tétraéthoxysilane (TEOS) ou le méthyltriéthoxysilane (MTEOS). Des fonctions organiques peuvent être incluses dans ces précurseurs et la silice finalement obtenue. A titre d'exemple, des silanes fluorés ont été décrits dans le EP799873 pour obtenir un revêtement hydrophobe. L'embossage peut aussi être réalisé sur des couches polymères comme
le polyéthylène téréphtalate (PET),
le polystyrène,
les polyacrylates tels que poly(méthacrylate de méthyle), poly(acrylate de butyle), poly(acide méthacrylique), poly(méthacrylate de 2-hydroxyéthyle) et leur copolymères,
les polyépoxy(méth)acrylates,
les polyuréthane(méth)acrylates,
les polyimides tels que polyméthylglutarimide,
les polysiloxanes tels que polyépoxysiloxanes,
les poly (éthers vinyliques),
les polybisbenzocyclobutènes ...
seuls ou en copolymères ou mélanges de plusieurs d'entre eux.

L'embossage peut être suivi dans certains cas d'une gravure. La couche sol-gel ou polymère embossée peut y être attaquée jusqu'à réapparition du matériau de la feuille transparente sous-jacente, en premier lieu dans les parties profondes desdits motifs en relief, puis progressivement jusque dans leurs parties hautes. Ainsi la surface plus ou moins irrégulière obtenue à la fin de la gravure peut être formée entièrement dans la couche sol-gel ou polymère rapportée, ou en partie dans celle-ci et en partie dans ladite feuille transparente, ou encore entièrement dans cette dernière. Les conditions de la gravure doivent être réglées pour que cette surface qui en résulte présente des motifs en relief de dimensions satisfaisant la définition du dispositif de l'invention.

On peut citer comme procédés de gravure :
une gravure chimique, par un acide notamment,
une gravure ionique réactive (Reactive Ion (Beam) Etching = RI(B)E),
une gravure par plasma (Inductively Coupled Plasma = ICP).

Il est à remarquer que le procédé d'embossage permet le traitement rapide de relativement vastes surfaces, à un coût modéré.

Un autre procédé possible de fabrication du réseau selon l'invention comprend une photolithographie. Ce procédé consiste généralement à munir d'abord le substrat transparent d'une première couche dans laquelle pourront être formés lesdits motifs en relief. Cette première couche est comparable à la couche sol-gel ou polymère rapportée du procédé d'embossage. Elle peut d'ailleurs être de la même nature que celle-ci, notamment en silice. Dans une deuxième étape du procédé, on dépose une deuxième couche d'une résine photosensible. Celle-ci est durcie en des localisations définies, par exposition à un rayonnement ciblé. Ainsi est constitué un masque, au-dessus de la première couche à graver, après élimination des parties non durcies de la résine photosensible. Puis on grave, de la même manière que décrit ci-dessus relativement à l'étape facultative du procédé par embossage. D'éventuels résidus de la résine photosensible peuvent être éliminés.

Un autre procédé de fabrication du réseau selon l'invention comprend le transfert d'une couche nanostructurée. Une couche en adhésion sur un premier support est mise en adhésion sur un second, de manière à constituer un dispositif selon l'invention. La couche peut être en matière plastique ou similaire.

Un autre procédé utilisable repose sur un échange ionique, par exemple d'ions Na⁺ par des Ag⁺ dans un verre minéral.

Enfin, on peut utiliser un effet photoréfractif, selon lequel une lumière modulée induit une modulation spatiale de l'indice de réfraction du matériau (exemple : cristal photoréfractif en titanate de Baryum). On peut également utiliser un effet électrooptique selon lequel un champ électrique induit une modulation spatiale de l'indice de réfraction du matériau.

Le réseau selon l'invention sert notamment en application daylighting. Dans ce cas, il est placé sur un vitrage vertical, de sorte que les lignes de motifs soient horizontales. Le réseau occupe généralement une hauteur d'au moins 10 cm et plus généralement une hauteur d'au moins 20 cm du vitrage, généralement sur toute la largeur du vitrage et dans la partie supérieure du vitrage.

Les motifs peuvent être situés sur la face du vitrage recevant la lumière incidente ou sur la face du vitrage ou la lumière émerge (face tournée vers l'intérieur du bâtiment).

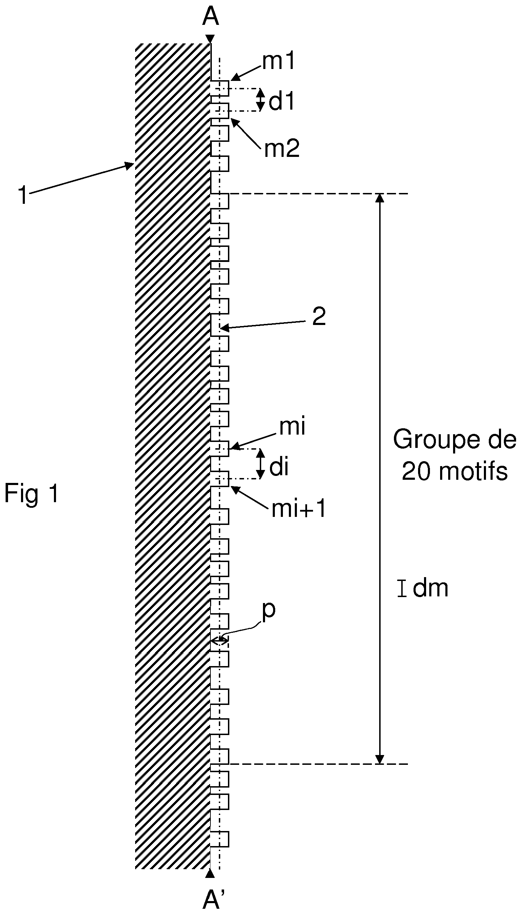

La figure 1 représente un substrat en coupe muni à sa surface d'un réseau diffusant selon l'invention. Le substrat 1 comprend à sa surface une multiplicité de lignes parallèles de motifs mᵢ à section rectangulaire. Les motifs sont donc linéaires et parallèles dans une direction perpendiculaire à la figure 1 (cette direction est généralement horizontale lorsque le vitrage portant le réseau est posé). Ces motifs sont donc des parallélépipèdes dont la figure 1 ne montre que les sections. Tous les motifs ont la même géométrie mais leur distance entre voisins varie. Ces motifs ont un indice de réfraction R1. Ils sont séparés par de l'air qui constitue donc les domaines entre motifs. Ces domaines d'air ont un indice de réfraction R2, généralement environ de valeur 1. La ligne en pointillé 2 passe par les barycentres de tous les motifs. Cette ligne passe aussi alternativement par les motifs et par les domaines d'air, et quand on va d'un bord à l'autre du réseau sur cette ligne, on passe donc alternativement par les indices de réfraction R1 et R2. Le barycentre d'un motif est bien entendu celui de la matière dépassant du substrat, c'est-à-dire venant en excroissance du substrat par rapport à la ligne A A', c'est-à-dire la matière sur la profondeur p des motifs. A titre d'exemple, on a indiqué la distance d1 entre les motifs m1 et m2. Un groupe de 20 motifs successifs est représenté, la moyenne des distances di entre motifs voisins (mi et mi+1) de ce groupe étant indiquée comme étant dm. Lorsqu'on part du bord supérieur du groupe de 20 motifs en allant en direction de l'autre bord du même groupe, d passe d'abord sous dm, puis, quand on descend, d passe au-dessus de dm, puis repasse en dessous, puis repasse au-dessus, etc. La distance d entre barycentres de motifs voisins fluctue donc autour de dm.
La figure 2 illustre l'effet du substrat 3 selon l'invention sur la lumière solaire le traversant. Le substrat transparent 3 redirige une portion de la lumière incidente dans la direction souhaitée (rayons 5 en ordre 1 de la figure 2), par exemple le plafond 4. Dans le même temps il laisse passer sans la dévier ni la diffuser le reste de la lumière incidente (rayons 6 en ordre 0 de la figure 2). La lumière redirigée 5 est diffusée et ne comporte alors pas d'irisation apparente prononcée.
La figure 3 représente le pourcentage de lumière transmise en fonction de l'angle d'émergence de la lumière selon le dispositif de la figure 2. On voit que la transmission dans l'ordre 1 autour de θ = -35° ne se fait pas suivant une direction unique mais sur une large plage d'angles variant de -45° à -20°. Au contraire, la lumière transmise (rayons 6 de la figure 2) sans être redirigée, n'est pas diffusée. La transmission dans l'ordre 0 se fait uniquement pour un angle de θ = 40°. Le substrat muni du réseau selon l'invention est donc transparent et non-diffusant en vision directe pour un observateur.

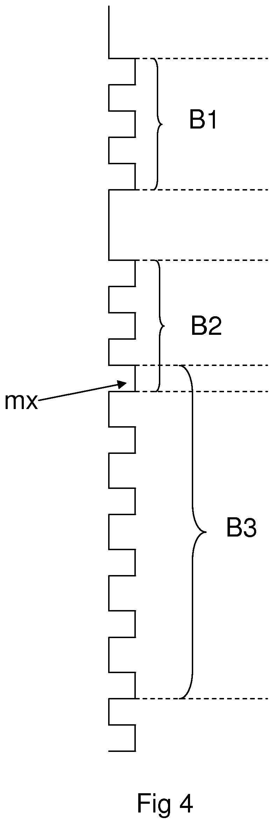

La figure 4 illustre la notion de bloc. Le bloc B1 contient 3 motifs séparés par deux intervalles. Quand on part de l'intérieur du bloc B1, on quitte le bloc dès que la distance entre motifs devient différente (plus grande ici). Le bloc B2 est identique au bloc B1. Le bloc B3 contient six motifs et cinq intervalles. Le motif mx est commun aux blocs B2 et B3.

### EXEMPLE 1 (comparatif)

On dépose une couche de 360 nm d'épaisseur en silice par sol-gel sur les 50 cm situés en partie supérieure d'un vitrage de marque planilux commercialisé par Saint-Gobain Glass France. De façon connue de l'homme du métier, on a réalisé par embossage une texture de motifs linéaires en relief de profondeur 360 nm et de largeur 200 nm. Les motifs sont perpendiculaires au plan du film. L'écart entre les barycentres de ces motifs passait progressivement de 300 à 500 nm quand on passe d'un bord du réseau à l'autre bord (soit en parcourant les 50 cm de réseau). La vitre est alors placée comme fenêtre de mur extérieur. La vitre redirige de la lumière provenant de l'extérieur vers le plafond, mais on distingue des irisations.

### EXEMPLE 2

On procède comme pour l'exemple 1, sauf que l'écart entre les barycentres varie entre 300 et 500 nm de façon aléatoire sur les 50 cm de réseau. Aucune irisation marquée n'est observée.

## Revendications

1. Substrat (1) transparent en vision directe et déviant de la lumière en la diffusant, comprenant à sa surface un réseau de lignes d'au moins 200 motifs séparés par des domaines d'indice de réfraction différent de celui des motifs, **caractérisée en ce que** la distance d entre barycentres de motifs voisins variant de manière non-monotone d'un bord à l'autre du réseau, de sorte que pour tout groupe de 50 motifs successifs, la distance d entre barycentres de motifs voisins dudit groupe est au moins une fois supérieure et au moins une fois inférieure à la distance moyenne dm des distances d entre barycentres de motifs voisins dudit groupe, dm étant comprise entre 75 nm et 200 µm.

2. Substrat (1) selon la revendication précédente, **caractérisé en ce que** pour tout groupe de 50 motifs successifs, d s'écarte de la distance moyenne dm des distances d à l'intérieur dudit groupe au moins une fois en étant au dessus de dm + y et au moins une fois en étant en-dessous de dm - y, y étant d'au moins 5% dm.

3. Substrat (1) selon la revendication précédente, **caractérisé en ce que** y est d'au moins 10% dm.

4. Substrat (1) selon l'une des revendications précédentes, **caractérisé en ce que** pour tout groupe de 50 motifs successifs, d reste à l'intérieur de dm + x et dm - x, x étant d'au plus 50% dm.

5. Substrat (1) selon la revendication 1, **caractérisé en ce que** pour tout groupe de 20 motifs successifs, la distance d entre barycentres de motifs voisins dudit groupe est au moins une fois supérieure et au moins une fois inférieure à la distance moyenne dm des distances d entre barycentres de motifs voisins dudit groupe, dm étant comprise entre 75 nm et 200 µm.

6. Substrat (1) selon la revendication précédente, **caractérisé en ce que** pour tout groupe de 20 motifs successifs, d s'écarte de la distance moyenne dm des distances d à l'intérieur dudit groupe au moins une fois en étant au dessus de dm + y et au moins une fois en étant en-dessous de dm - y, y étant d'au moins 5% dm.

7. Substrat (1) selon la revendication précédente, **caractérisé en ce que** y est d'au moins 10% dm.

8. Substrat (1) selon l'une des trois revendications précédentes, **caractérisé en ce que** pour tout groupe de 20 motifs successifs, d reste à l'intérieur de dm + x et dm - x, x étant d'au plus 50% dm.

9. Substrat (1) selon l'une des revendications précédentes, **caractérisé en ce que**, si DM représente la valeur moyenne des distances d entre barycentres de motifs voisins pour tout le réseau, la largeur moyenne Lm des motifs va de 0,1 DM à 0,9 DM.

10. Substrat (1) selon la revendication précédente, **caractérisé en ce que** tous les motifs du réseau ont une largeur comprise entre 0,5Lm et 1,5Lm.

11. Substrat (1) selon l'une des revendications précédentes, **caractérisé en ce que** au moins 80% des motifs du réseau forment des blocs, chaque bloc comprenant 3 à 15 motifs identiques juxtaposés à intervalle constant entre motifs.

12. Substrat (1) selon la revendication précédente, **caractérisé en ce que** au moins 90% des motifs du réseau forment des blocs, chaque bloc comprenant 3 à 15 motifs identiques juxtaposés à intervalle constant entre motifs.

13. Substrat (1) selon l'une des deux revendications précédentes, **caractérisé en ce que** chaque bloc comprend 3 à 7 motifs identiques juxtaposés à intervalle constant entre motifs.

14. Substrat (1) selon l'une des revendications précédentes, **caractérisé en ce que** le rapport de la largeur L sur la profondeur des motifs va de 0,2 à 5.

15. Substrat (1) selon la revendication précédente, **caractérisé en ce que** le rapport de la largeur L sur la profondeur des motifs va de 0,4 à 2.

16. Substrat (1) selon l'une des revendications précédentes, **caractérisé en ce que** les indices de réfraction des motifs et domaines sont choisi dans la plage de 1 à 2,2.

17. Substrat (1) selon l'une des revendications précédentes, **caractérisé en ce que** dm est inférieur à 500 nm.

18. Substrat (1) selon la revendication précédente, **caractérisé en ce que** dm est inférieur ou égal à 450 nm.

19. Substrat (1) selon l'une des revendications précédentes, **caractérisé en ce que** dm est supérieur ou égal à 200 nm.

20. Substrat (1) selon la revendication précédente, **caractérisé en ce que** dm est supérieur ou égal à 300 nm.

21. Substrat (1) selon l'une des revendications précédentes, **caractérisé en ce que** la lumière visible présentant un angle d'incidence supérieure à 30° est déviée et diffuse pour 10 à 50% de la lumière transmise, la lumière non-déviée n'étant pas diffuse.

22. Fenêtre comprenant un substrat (1) de l'une des revendications précédentes.

23. Bâtiment comprenant une fenêtre selon la revendication précédente, ladite fenêtre étant verticale et exposée à la lumière solaire.

24. Bâtiment selon la revendication précédente, caractérisé en qu'il est situé en une latitude terrestre telle que les rayons solaires peuvent former un angle d'incidence avec l'horizontale supérieur à 30° au moins partiellement au cours de l'année.

25. Utilisation d'un substrat (1) de l'une des revendications de substrat (1) précédentes pour rediriger la lumière solaire vers un plafond.

## Patentansprüche

1. Substrat (1)
transparent bei direkter Sicht und das Licht umlenkend durch Verbreiten, das auf seiner Oberfläche ein Liniennetz umfasst mit mindestens 200 Motiven getrennt durch Bereiche des Brechungsindexes, der von dem der Motive abweicht, **dadurch gekennzeichnet, dass** der Abstand d zwischen den Baryzentren der angrenzenden Motive nicht monoton von einem zum anderen Rand des Netzes variiert, sodass für jede Gruppe aus 50 aufeinanderfolgenden Motiven der Abtand d zwischen den Baryzentren der angrenzenden Motive der besagten Gruppe mindestens ein Mal höher ist und mindestens ein Mal niedriger als der durchschnittliche Abstand dm der Abstände d zwischen den Baryzentren der angrenzenden Motive der genannten Gruppe, wobei dm zwischen 75 nm und 200 µm liegt.

2. Substrat (1)
nach dem vorangegangenen Anspruch, **dadurch gekennzeichnet, dass** für jede Gruppe mit 50 aufeinanderfolgenden Motiven d von dem durchschnittlichen Abstand dm der Abstände d zum Inneren der genannten Gruppe mindestens ein Mal abweicht, indem er über dm + y liegt und mindestens ein Mal, indem er unter dm - y liegt und y mindestens 5% dm beträgt.

3. Substrat (1)
nach dem vorangegangenen Anspruch, **dadurch gekennzeichnet, dass** y mindestens 10% dm beträgt.

4. Substrat (1)
nach einem der vorangegangenen Ansprüche, **dadurch gekennzeichnet, dass** für jede Gruppe mit 50 aufeinanderfolgenden Motiven d im Inneren von dm + x und dm - x bleibt, wobei x höchstens 50% dm beträgt.

5. Substrat (1)
nach dem Anspruch 1, **dadurch gekennzeichnet, dass** für jede Gruppe aus 20 aufeinanderfolgenden Motiven der Abtand d zwischen den Baryzentren der angrenzenden Motive der besagten Gruppe mindestens ein Mal höher ist und mindestens ein Mal niedriger als der durchschnittliche Abstand dm der Abstände d zwischen den Baryzentren der angrenzenden Motive der genannten Gruppe, wobei dm zwischen 75 nm und 200 µm liegt.

6. Substrat (1)
nach dem vorangegangenen Anspruch, **dadurch gekennzeichnet, dass** für jede Gruppe mit 20 aufeinanderfolgenden Motiven d von dem durchschnittlichen Abstand dm der Abstände d zum Inneren der genannten Gruppe mindestens ein Mal abweicht, indem er über dm + y liegt und mindestens ein Mal, indem er unter dm - y liegt und y mindestens 5% dm beträgt.

7. Substrat (1)
nach dem vorangegangenen Anspruch, **dadurch gekennzeichnet, dass** y mindestens 10% dm beträgt.

8. Substrat (1)
nach einer der drei vorangegangenen Ansprüche, **dadurch gekennzeichnet, dass** für jede Gruppe mit 20 aufeinanderfolgenden Motiven d im Inneren von dm + x und dm - x bleibt, wobei x höchstens 50% dm beträgt.

9. Substrat (1)
nach einem der vorangegangenen Ansprüche, **dadurch gekennzeichnet, dass** DM den durchschnittlichen Wert der Abstände d zwischen Baryzentren der angrenzenden Motive für das gesamte Netz darstellt, die durchschnittliche Breite Lm der Motive reicht von 0,1 DM bs 0,9 DM.

10. Substrat (1)
nach dem vorangegangenen Anspruch, **dadurch gekennzeichnet, dass** alle Motive des Netzes eine Breite zwischen 0,5Lm und 1,5Lm haben.

11. Substrat (1)
nach einem der vorangegangenen Ansprüche, **dadurch gekennzeichnet, dass** mindestens 80% der Motive des Netzes Blöcke bilden, wobei jeder Block 3 bis 15 identische Motive, gegenübergestellt in konstanten Intervallen zwischen den Motiven, umfasst.

12. Substrat (1)
nach dem vorangegangenen Anspruch, **dadurch gekennzeichnet, dass** mindestens 90% der Motive des Netzes Blöcke bilden, wobei jeder Block 3 bis 15 identische Motive, gegenübergestellt in konstanten Intervallen zwischen den Motiven, umfasst.

13. Substrat (1)
nach einem der beiden vorangegangenen Ansprüche, **dadurch gekennzeichnet, dass** jeder Block 3 bis 7 identische Motive, gegenübergestellt in konstanten Intervallen zwischen den Motiven, umfasst.

14. Substrat (1)
nach einem der vorangegangenen Ansprüche, **dadurch gekennzeichnet, dass** das Verhältnis der Breite L zur Tiefe der Motive 0,2 bis 5 beträgt.

15. Substrat (1)
nach dem vorangegangenen Anspruch, **dadurch gekennzeichnet, dass** das Verhältnis der Breite L zur Tiefe der Motive 0,4 bis 2 beträgt.

16. Substrat (1)
nach einem der vorangegangenen Ansprüche, **dadurch gekennzeichnet, dass** die Brechungsindexe der Motive und Bereiche ausgewählt werden aus der Spanne von 1 bis 2,2 ausgewählt sind.

17. Substrat (1)
nach einem der vorangegangenen Ansprüche, **dadurch gekennzeichnet, dass** dm unter 500 nm liegt.

18. Substrat (1)
nach dem vorangegangenen Anspruch, **dadurch gekennzeichnet, dass** dm gleich oder niedriger als 450 nm ist.

19. Substrat (1)
nach einem der vorangegangenen Ansprüche, **dadurch gekennzeichnet, dass**, dass dm gleich oder höher als 200 nm ist.

20. Substrat (1)
nach dem vorangegangenen Anspruch, **dadurch gekennzeichnet, dass** dm gleich oder höher als 300 nm ist.

21. Substrat (1)
nach einem der vorangegangenen Ansprüche, **dadurch gekennzeichnet, dass** das sichtbare Licht, das einen Einfallwinkel über 30° aufweist, um 10 bis 50% von dem übertragenen Licht abgelenkt und zerstreut wird, wobei das nicht abgelenkte Licht nicht zerstreut wird.

22. Fenster umfassend ein Substrat (1)
eines der vorangegangenen Ansprüche.

23. Gebäude umfassend ein Fenster nach dem vorangegangenen Anspruch, wobei das genannte Fenster vertikal ist und dem Sonnenlicht ausgesetzt ist.

24. Gebäude nach dem vorangegangenen Anspruch, **dadurch gekennzeichnet, dass** es sich auf einem Breitengrad der Erde befindet, auf dem die Sonnenstrahlen einen Einfallwinkel zur Horizontalen über 30° zumindest teilweise im Verlauf des Jahres bilden können.

25. Verwendung eines Substrats (1)
eines der vorangegangenen Ansprüche des Substrats (1), um das Sonnenlicht zu einer Decke umzuleiten.

## Claims

1. A substrate (1) that is transparent in direct vision and that deflects the light while diffusing it, comprising at its surface a grating of lines of at least 200 elements separated by domains with a different refractive index from that of the elements, **characterized in that** the distance d between centers of gravity of neighboring elements vary in a non-monotonic manner from one edge of the grating to the other, so that for any group of 50 successive elements, the distance d between the centers of gravity of neighboring elements of said group is at least once greater than and at least once less than the mean distance dm of distances d between centers of gravity of neighboring elements of said group, dm lying between 75 nm and 200 µm.

2. The substrate (1) as claimed in the preceding claim, **characterized in that** for any group of 50 successive elements, d deviates from the mean distance dm of distances d within said group at least once while being above dm+y and at least once while being below dm-y, y being at least 5% dm.

3. The substrate (1) as claimed in the preceding claim, **characterized in that** y is at least 10% dm.

4. The substrate (1) as claimed in one of the preceding claims, **characterized in that** for any group of 50 successive elements, d remains within dm+x and dm-x, x being at most 50% dm.

5. The substrate (1) as claimed in claim 1, **characterized in that** for any group of 20 successive elements, the distance d between centers of gravity of neighboring elements of said group is at least once greater than and at least once less than the mean distance dm of distances d between centers of gravity of neighboring elements of said group, dm lying between 75 nm and 200 µm.

6. The substrate (1) as claimed in the preceding claim, **characterized in that** for any group of 20 successive elements, d deviates from the mean distance dm of distances d within said group at least once while being above dm+y and at least once while being below dm-y, y being at least 5% dm.

7. The substrate (1) as claimed in the preceding claim, **characterized in that** y is at least 10% dm.

8. The substrate (1) as claimed in one of the three preceding claims, **characterized in that** for any group of 20 successive elements, d remains within dm+x and dm-x, x being at most 50% dm.

9. The substrate (1) as claimed in one of the preceding claims, **characterized in that**, if DM represents the mean value of distances d between centers of gravity of neighboring elements for all the grating, the mean width L of elements extends from 0.1 DM to 0.9 DM.

10. The substrate (1) as claimed in the preceding claim, **characterized in that** all the elements of the grating have a width between 0.5 Lm and 1.5 Lm.

11. The substrate (1) as claimed in one of the preceding claims, **characterized in that** at least 80% of the elements of the grating form blocks, each block comprising 3 to 15 identical juxtaposed elements with a constant interval between elements.

12. The substrate (1) as claimed in the preceding claim, **characterized in that** at last 90% of the elements of the grating form blocks, each block comprising 3 to 15 identical juxtaposed elements with a constant interval between elements.

13. The substrate (1) as claimed in one of the two preceding claims, **characterized in that** each block comprises 3 to 7 identical juxtaposed elements with a constant interval between elements.

14. The substrate (1) as claimed in one of the preceding claims, **characterized in that** the ratio of the width L to the depth of the elements extends from 0.2 to 5.

15. The substrate (1) as claimed in the preceding claim, **characterized in that** the ratio of the width L to the depth of the elements extends from 0.4 to 2.

16. The substrate (1) as claimed in one of the preceding claims, **characterized in that** the refractive indices of elements and domains are chosen within the range 1 to 2.2.

17. The substrate (1) as claimed in one of the preceding claims, **characterized in that** dm is less than 500 nm.

18. The substrate (1) as claimed in the preceding claim, **characterized in that** dm is less than or equal to 450 nm.

19. The substrate (1) as claimed in one of the preceding claims, **characterized in that** dm is greater than or equal to 200 nm.

20. The substrate (1) as claimed in the preceding claim, **characterized in that** dm is greater than or equal to 300 nm.

21. The substrate (1) as claimed in one of the preceding claims, **characterized in that** visible light having an angle of incidence greater than 30° is deflected and diffuse for 10 to 50% of the transmitted light, the non-deflected light not being diffuse.

22. A window having a substrate (1) of one of the preceding claims.

23. A building having a window according to the preceding claim, said window being vertical and exposed to solar light.

24. The building as claimed in the preceding claim, **characterized in that** it is situated in a terrestrial latitude such that solar rays can form an angle of incidence with the horizontal greater than 30°, at least partially during the year.

25. The use for a substrate (1) of one of the preceding claims for the substrate for redirecting solar light to a ceiling.
